# FASCICULE DE BREVET EUROPEEN

(11) **EP 4 397 536 B1**
(45) Date de publication et mention de la délivrance du brevet: **27.08.2025**
(21) Numéro de dépôt: 23212647.4
(22) Date de dépôt: 28.11.2023
(51) Int. Cl.: B60N 2/68, B60N 2/70, B60N 2/90

(54) **COUSSIN MODULAIRE D'ASSISE COMPRENANT UN TRAVERSIN LATÉRAL MODULAIRE, ET ENSEMBLE DE SIÈGE COMPRENANT UN TEL COUSSIN ET UN TEL TRAVERSIN**
MODULARES SITZKISSEN MIT MODULAREM SEITENQUERGLIED UND SITZANORDNUNG MIT SOLCH EINEM KISSEN UND SOLCH EINEM SEITENQUERGLIED
MODULAR SEAT CUSHION COMPRISING A MODULAR LATERAL BOLSTER, AND SEAT ASSEMBLY COMPRISING SUCH A CUSHION AND SUCH BOLSTER

(30) Priorité: 03.01.2023 FR 2300040
(43) Date de publication de la demande: 10.07.2024
(73) Titulaire: FAURECIA Sièges d'Automobile, 92000 Nanterre (FR)
(72) Inventeur: REITH, Carsten, 31712 NIEDERNWÖHREN (DE); PHARATE, Abhijeet, 411027 PUNE (IN); KETELS, Cédric, WHITE LAKE MICHIGAN, 48386 (US); DURIEZ, Didier, 91220 LE PLESSIS PATE (FR); GATHIBANDHE, Swapnil, 442001 MAHARASHTRA (IN); MICHAUD, Marine, 75006 PARIS (FR)
(74) Mandataire: Novagraaf Group

(56) Documents cités:
- EP-A2- 1 000 855
- FR-A1- 2 814 709
- FR-A1- 2 884 772
- US-A1- 2020 070 699

## Description

La présente invention est relative à un coussin modulaire d'assise et à au moins un traversin latéral modulaire, le coussin modulaire d'assise est configuré pour être fixé de manière amovible à une structure d'assise, et le traversin latéral modulaire est configuré pour être fixé de manière amovible sur le coussin modulaire d'assise. La présente invention est également relative à un ensemble de siège comprenant un coussin modulaire et au moins un traversin latéral modulaire.

La présente invention concerne encore un procédé d'obtention d'un ensemble de siège selon la présente invention, ainsi qu'un procédé de maintenance d'un ensemble de siège selon la présente invention.

### Domaine technique

La présente invention relève du domaine des sièges de véhicule

### Technique antérieure

L'état de la technique des sièges des véhicules, connait une conception de siège qui nécessite d'assembler les différents composants du siège en un site, typiquement selon une fabrication juste à temps connue sous l'abréviation anglaise « JIT » pour « Just-In Time manufacturing ».

La structure du siège d'un véhicule automobile comprend une structure de siège typiquement métallique qui comprend classiquement une structure d'assise et une structure de dossier.

La structure de siège peut comporter :
- deux glissières, droite et gauche G1, G2, comprenant chacune un profilé inférieur, typiquement femelle, fixe par rapport à un plancher, et un profilé supérieur, mâle, monté coulissant par rapport au profilé inférieur, typiquement suivant une direction X qui peut être la direction d'avance du véhicule,
- une structure d'assise qui comprend classiquement, deux flasques, droite et gauche, entretoisés par des tubes, et en particulier un tube avant entretoisant les flasques, sur une portion avant de la structure d'assise et un tube arrière entretoisant les flasques sur une portion arrière de la structure d'assise, les tubes avant et arrière s'étendant de manière parallèle, suivant une direction transversale,
- une pièce de nez, métallique qui relie des extrémités avant des flasques et est conformée pour former une surface de support pour le soutien du coussin d'assise.

La hauteur de la structure d'assise, à savoir de l'ensemble qui comprend les flasques et la pièce de nez peut être typiquement réglée par un système de réhausse qui peut comprendre une paire de biellettes avant, droite et gauche, reliant le tube avant et les profilés supérieurs des glissières droite et gauche, et une parie de biellettes arrière, droite et gauche, reliant le tube arrière et les profilés supérieurs des glissières, droite et gauche.

L'assise d'un tel siège peut comprendre en outre une matelassure d'assise, typiquement en mousse polyuréthane expansée, et un revêtement d'habillage recouvrant la matelassure d'assise en mousse. L'assise peut comprendre en outre au moins un traversin latéral (aussi appelé bolster en anglais) formé d'une matelassure latérale, typiquement en mousse polyuréthane expansée, par exemple agencé de part et d'autre de la matelassure d'assise ou formant un seul bloc avec la matelassure d'assise, l'ensemble étant recouvert par le revêtement d'habillage

L'assise d'un siège a tendance à s'user dans le temps pouvant se traduire par une usure du revêtement d'habillage / de la matelassure, voir même une déchirure du revêtement d'habillage et/ou de la matelassure.

Lors du remplacement d'une partie de l'assise abimée, il est généralement nécessaire de démonter au mieux l'assise complète voire cette opération étant bien souvent opérée après retrait du siège complet du véhicule.

On connait encore de l'état de la technique une conception modulaire de l'assise qui comporte une base support, bien souvent plastique, une matelassure et un élément de couverture, qui peuvent être préassemblés, bien souvent sur un site distinct du site final d'assemblage, typiquement à coût de main d'œuvre plus compétitif.

L'assemblage final est obtenu par la fixation du coussin modulaire d'assise, élément d'un seul tenant, sur le châssis d'assise du siège, de manière rapide lors de l'assemblage final. Lors de la maintenance, par exemple lorsqu'un composant de l'assise est usé, il est possible de retirer le module d'assise au complet, et de le remplacer par un module d'assise neuf. Selon les constatations des inventeurs, si une telle solution est particulièrement satisfaisante lors de la mise en œuvre de l'assemblage final en raison d'un temps de fabrication optimisé lors de l'assemblage final, elle impose, lors de la maintenance, de changer le module d'assise complet, et même si une partie seulement du module est abimée.

Le document US2020070699 apporte une solution à ce problème, par une conception divisée du module d'assise, et du module de dossier, chaque module (d'assise ou de dossier), étant composé de trois parties, consistant, en une partie principale, et de deux parties latérales, disposées de part et d'autre de la partie centrale. Comme développé à l'alinéa 118 de ce document US2020070699, l'intérêt d'une telle conception divisée est de pouvoir, lors de la maintenance, ne changer qu'un segment seulement de l'assise (ou du dossier), à bas cout. Cette solution de maintenance est en effet moins onéreuse par rapport à l'état de la technique précité requérant de remplacer le module d'assise complet. Selon les constatations des inventeurs, cette solution n'est toutefois pas totalement satisfaisante, et en particulier lors de l'assemblage final, en ce qu'elle impose l'assemblage de nombreux segments de modules sur la structure de siège, en particulier pour l'assise, ce qui augmente le temps de cycle de fabrication du siège sur le site d'assemblage final.

La présente invention vient améliorer la situation.

### Résumé

Il est ainsi proposé un coussin modulaire d'assise configuré pour être fixé à une structure d'assise, ladite structure d'assise étant configurée pour fixer de manière amovible ledit coussin modulaire d'assise,
ledit coussin modulaire d'assise comprend à l'état assemblé :
   - une base principale ayant une surface inférieure configurée pour être fixée sur ladite structure d'assise,
   - une matelassure centrale reposant sur une surface supérieure de la base principale et formant une portion centrale,
   - un revêtement central d'habillage recouvrant la matelassure centrale,
   - au moins un traversin latéral modulaire fixé de manière amovible sur la base principale et comprenant à l'état assemblé:
      - une base latérale,
      - une matelassure latérale reposant sur une surface supérieure de la base latérale et formant un bord relevé,
      - un revêtement latéral d'habillage recouvrant la matelassure latérale,
le coussin modulaire comprenant un système d'interface mécanique entre la base principale et la base latérale,
ledit coussin modulaire étant configuré pour autoriser le désassemblage du traversin latéral modulaire de la base principale indépendamment de la matelassure centrale et du revêtement central d'habillage qui restent fixés à la base principale.

Ainsi, avantageusement, une telle configuration d'un coussin modulaire d'assise comprenant au moins un traversin latéral modulaire permet un montage rapide sur une structure siège, en ce que le coussin modulaire d'assise, composant d'un seul tenant, à l'état assemblé peut être fixé rapidement à la structure métallique du siège, en particulier en formant tous les segments de l'assise, à savoir non seulement la portion centrale formant typiquement le médaillon de l'assise, mais encore les deux parties latérales. Les deux parties latérales typiquement plus hautes suivant une composante verticale par rapport à la portion centrale ont pour fonction d'assurer le maintien latéral de l'occupant sur l'assise. Une telle configuration facilite par ailleurs la maintenance de l'assise, et sans qu'il soit nécessaire de démonter la structure du siège du plancher d'un véhicule.

En outre, et de manière notable, avantageusement, une telle configuration autorise un montage et/ou une maintenance aisée du traversin latéral, composant modulaire indépendamment de la matelassure centrale et du revêtement central d'habillage qui restent fixés à la base principale, elle-même fixée à la structure du siège.

La présente invention est en particulier née de la constatation par les inventeurs, que le segment latéral de l'assise est bien souvent le segment de l'assise qui s'use le plus rapidement, et typiquement plus rapidement que le segment central de l'assise. La présente invention autorise ainsi le changement de ce segment à usure rapide, seulement, sans qu'il soit nécessaire de changer la portion centrale de l'assise, et en particulier la matelassure centrale et le revêtement central d'habillage qui restent fixés à la base principale, elle-même fixé à une structure de siège.

Dans un ou plusieurs modes de réalisation, le système d'interface mécanique comprend :
- une interface mécanique arrière comprenant une première partie de couplage sur la base principale et une deuxième partie de couplage sur la base latérale, ladite première partie de couplage et ladite deuxième partie de couplage coopérant par emboitement,
- une interface mécanique avant comprenant une première partie de verrouillage sur la base principale et une deuxième partie de verrouillage sur la base latérale,
et dans lequel l'interface mécanique arrière et l'interface mécanique avant sont configurées pour autoriser la fixation du traversin latéral modulaire sur la base principale suivant :
/A/ emboiter la première et deuxième partie de couplage,
/B/ pivoter ledit traversin modulaire autour de l'interface mécanique arrière jusqu'à réunir la première partie de verrouillage avec la deuxième partie de verrouillage.

Dans un ou plusieurs modes de réalisation, la première partie de verrouillage et la deuxième partie de verrouillage s'emboitent élastiquement lors du pivotement en B/.

Dans un ou plusieurs modes de réalisation, la première partie de verrouillage comprend une gâche et la deuxième partie de verrouillage comprend un loquet, le loquet et la gâche étant mis en regard en fin de pivotement en B/, et dans lequel un verrouillage du traversin latéral modulaire sur la base principale est obtenu suivant :
/C/ engager le loquet dans la gâche.

Dans un ou plusieurs modes de réalisation, la première partie de verrouillage et la deuxième partie de verrouillage sont fixées entre elles par un système vis-écrou.

Dans un ou plusieurs modes de réalisation, le système d'interface mécanique comprend une pluralité de premières parties de couplage agencées sur ladite base latérale et une pluralité de deuxièmes parties de couplage agencées sur la base principale, lesdites premières parties couplage et lesdites deuxièmes parties de couplage coopérant par emboitement,
et dans lequel ledit système interface mécanique est configuré pour autoriser la fixation dudit traversin latéral modulaire sur ledit coussin modulaire d'assise suivant :
/E/ mettre en regard les premières parties de couplage avec respectivement lesdites deuxièmes parties de couplage,
/F/ translater verticalement le traversin latéral modulaire jusqu'à l'emboitement des premières parties de couplage avec lesdites deuxièmes parties de couplage.

Dans un ou plusieurs modes de réalisation, la base latérale comprend un bord périphérique comprenant une gorge et le revêtement latéral d'habillage est pourvu d'un système d'accrochage le long d'au moins une partie d'extrémité du revêtement latéral d'habillage, ledit système d'accrochage étant configuré pour pénétrer la gorge en l'accrochant.

La présente invention concerne également un ensemble de siège comprenant un coussin modulaire d'assise selon la présente invention et une structure de siège présentant une structure d'assise, voire une structure de dossier et dans lequel,
ledit coussin modulaire d'assise comprend à l'état assemblé:
   - la base principale ayant une surface inférieure configurée pour être fixée sur ladite structure d'assise,
   - la matelassure centrale reposant sur une surface supérieure de la base principale et formant une portion centrale,
   - le revêtement central d'habillage recouvrant la matelassure centrale,
   - ledit au moins un traversin latéral modulaire fixé de manière amovible sur la base principale et comprenant à l'état assemblé:
      - la base latérale,
      - ladite matelassure latérale reposant sur une surface supérieure de la base latérale et formant un bord relevé,
      - ledit revêtement latéral d'habillage recouvrant la matelassure latérale,
le coussin modulaire comprenant un système d'interface mécanique entre la base principale et la base latérale,
le coussin modulaire étant configuré pour autoriser le retrait du traversin latéral modulaire de la base principale indépendamment de la matelassure centrale et du revêtement central d'habillage qui restent fixés à la base principale.

La présente invention porte également sur un procédé d'obtention d'un ensemble de siège selon la présente invention comprenant:
- fourniture d'une structure de siège, à l'état assemblé, comprenant une structure d'assise, voire une structure de dossier,
- fourniture d'un coussin modulaire d'assise selon la présente invention comprenant à l'état assemblé au moins la base principale ayant une surface inférieure configurée pour être fixée sur ladite structure d'assise, la matelassure centrale reposant sur une surface supérieure de la base principale et formant une portion centrale, le revêtement central d'habillage recouvrant la matelassure centrale,
   et ledit au moins un traversin latéral modulaire fixé de manière amovible sur la base principale, ledit au moins un traversin modulaire comprenant à l'état assemblé la base latérale, une matelassure latérale reposant sur une surface supérieure de la base latérale et formant un bord relevé, un revêtement latéral d'habillage recouvrant la matelassure latérale, le coussin modulaire comprenant ledit système d'interface mécanique entre la base principale et la base latérale,
- assemblage du coussin modulaire à ladite structure de siège.

Dans un ou plusieurs modes de réalisation, l'assemblage du coussin modulaire d'assise à la structure de siège est mis en œuvre sur un site d'assemblage final, et dans lequel le traversant modulaire d'assise est fabriqué sur un site distinct du site d'assemblage final.

La présente invention porte également sur un procédé de maintenance d'un ensemble de siège selon la présente invention, ou obtenu selon la présente invention, comprenant le désassemblage dudit au moins traversin latéral modulaire de la base principale sans démontage du coussin modulaire d'assise à la structure du siège par la mise en œuvre suivante :
/C/ déverrouillage de la base latérale de la base principale par le système de fixation, et successivement,
/D/ retrait du au moins traversin latéral modulaire.

### Brève description des dessins

D'autres caractéristiques, détails et avantages apparaîtront à la lecture de la description détaillée ci-après, et à l'analyse des dessins annexés, sur lesquels :
**Fig. 1a**

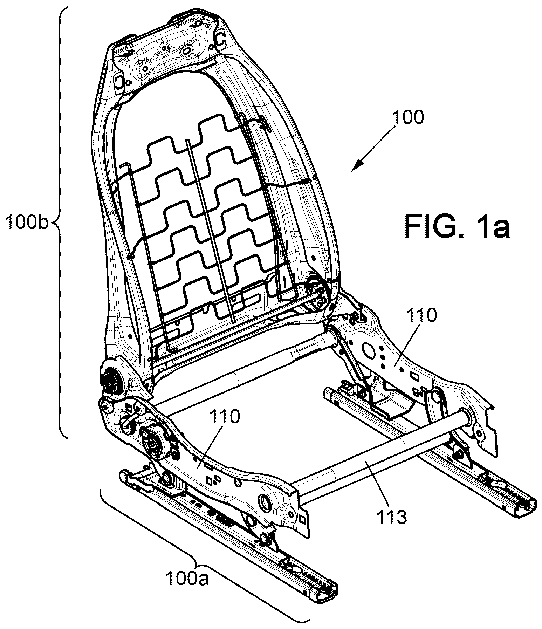

   [Fig. 1a] illustre une structure de siège comprenant une structure d'assise et une structure de dossier.
**Fig. 1b**

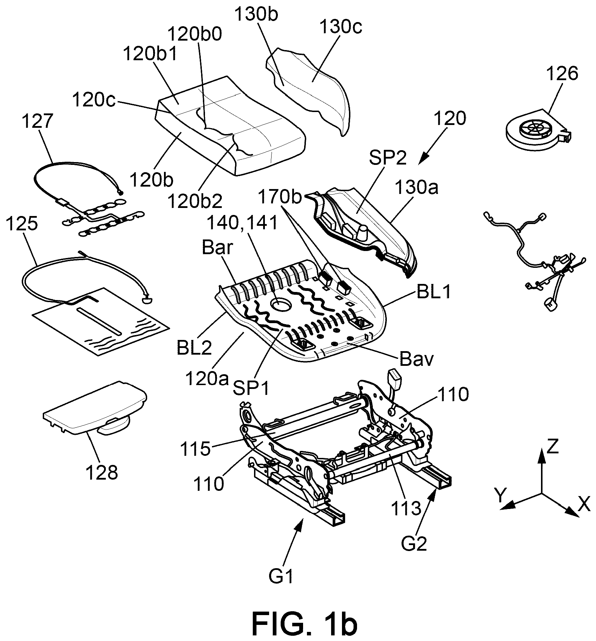

   [Fig. 1b] illustre une structure d'assise comprenant un coussin modulaire d'assise et au moins un traversin latéral modulaire.
**Fig. 1c**

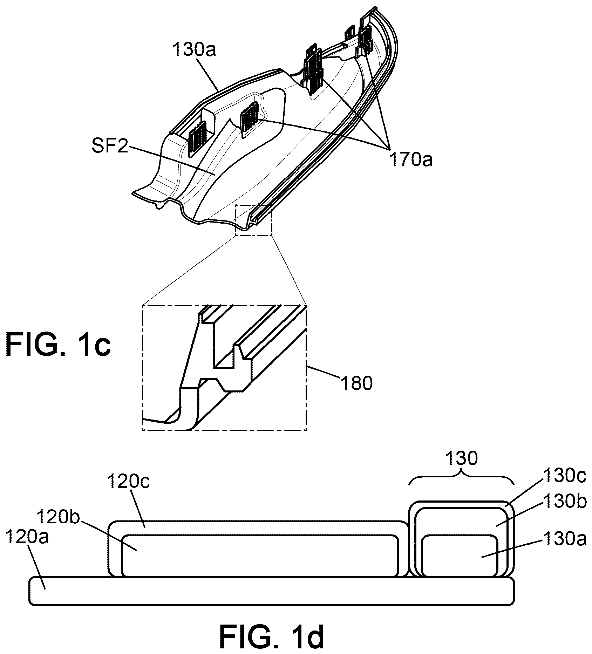

   [Fig. 1c] illustre la base latérale du traversin latéral modulaire.
**Fig. 1d**
   [Fig. 1d] illustre schématiquement une vue en coupe schématique YZ d'un coussin modulaire d'assise comprenant un traversin modulaire d'assise.
**Fig. 2a**

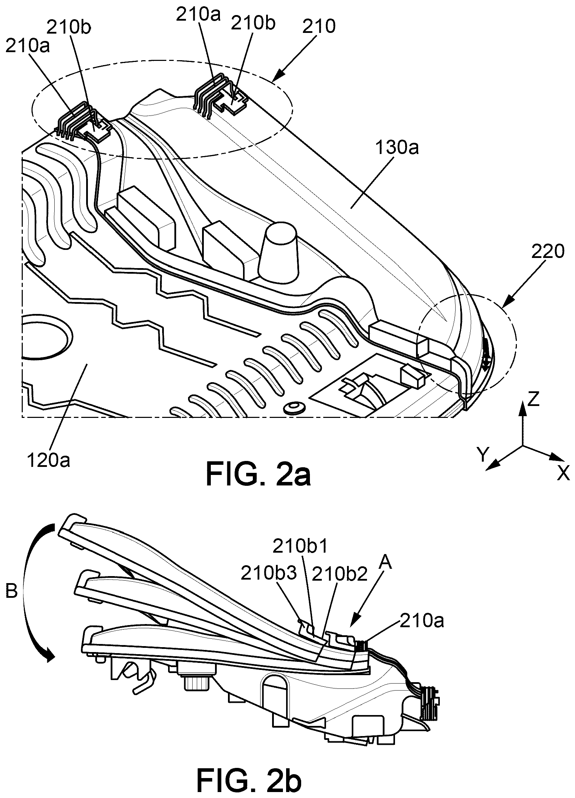

   [Fig. 2a] illustre un premier exemple de système d'interface mécanique.
**Fig. 2b**
   [Fig. 2b] illustre schématiquement la méthodologie pour mettre en place un traversin latéral modulaire sur un coussin modulaire d'assise comprenant un système d'interface mécanique selon la figure 2a.
**Fig. 3a**

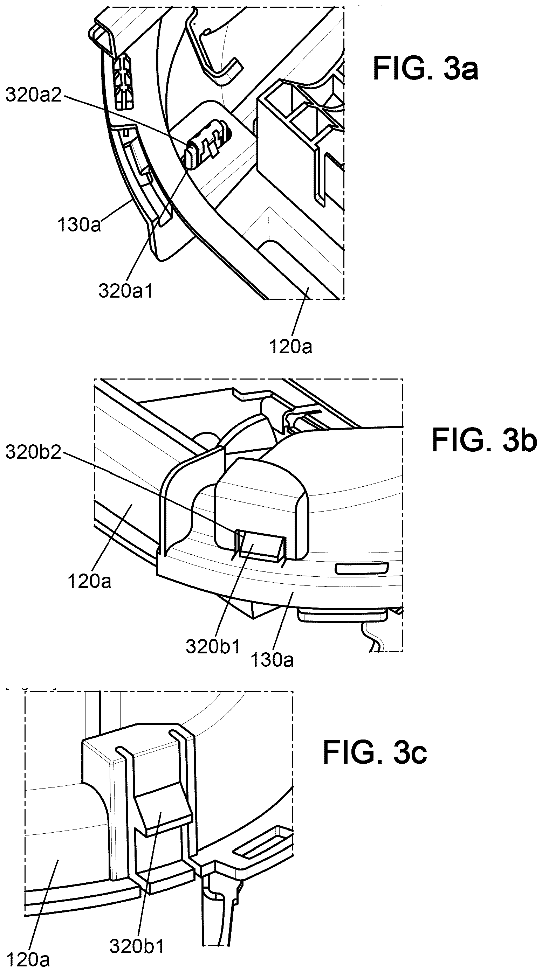

   [Fig. 3a] illustre un premier mode de réalisation de la première et deuxième partie de verrouillage.
**Fig. 3b**
   [Fig. 3b] illustre un deuxième mode de réalisation de la première et deuxième partie de verrouillage.
**Fig. 3c**
   [Fig. 3c] illustre le deuxième mode de réalisation de la première et deuxième partie de verrouillage.
**Fig. 3d**

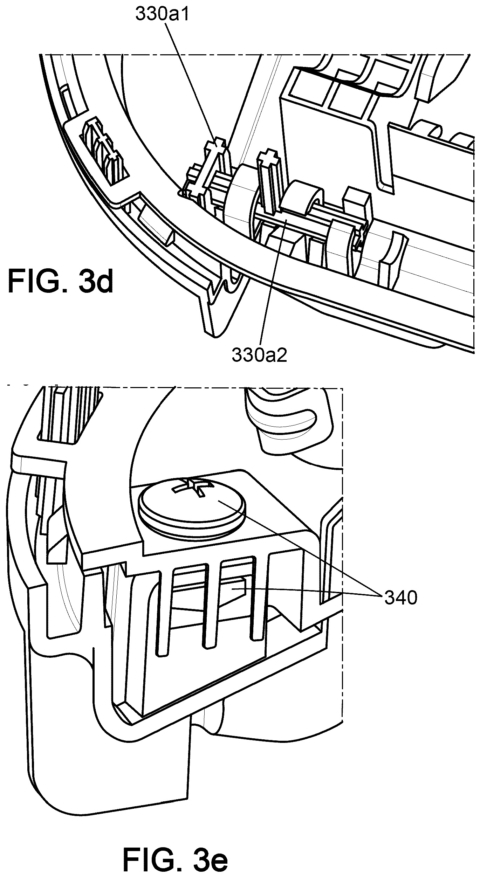

   [Fig. 3d] illustre un troisième mode de réalisation de la première et deuxième partie de verrouillage.
**Fig. 3e**
   [Fig. 3e] illustre un quatrième mode de réalisation de la première et deuxième partie de verrouillage.
**Fig. 4a**
   [Fig. 2a] illustre un deuxième exemple de système d'interface mécanique.
**Fig. 4b**

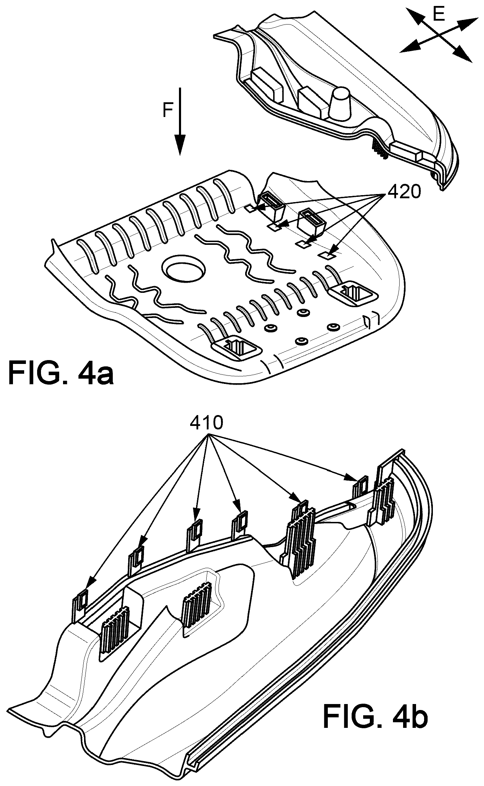

   [Fig. 4b] illustre schématiquement la méthodologie pour mettre en place un traversin latéral modulaire sur un coussin modulaire d'assise comprenant un système d'interface mécanique selon la figure 4a.

### Description des modes de réalisation

Les figures 1a à 1d illustrent un ensemble de siège comprenant un coussin modulaire d'assise et au moins un traversin latéral modulaire.

En particulier, la figure 1a illustre une structure de siège comprenant une structure d'assise et une structure de dossier, la figure 1b illustre une structure d'assise comprenant un coussin modulaire d'assise et au moins un traversin latéral modulaire, la figure 3c illustre la base latérale du traversin latéral modulaire, et la figure 1d illustre une vue en coupe schématique d'un coussin modulaire d'assise comprenant un traversin modulaire d'assise (aussi appelé « bolster » en anglais).

En référence aux figures 1a, 1b et 1d, la présente invention peut être relative à un ensemble de siège comprenant un coussin modulaire d'assise 120, configuré pour être fixé à une structure de siège 100 présentant une structure d'assise 100a et éventuellement une structure de dossier 100b. La structure d'assise peut comprendre deux flasques latéraux 110 entretoisés par un tube avant 113, transversal, et un tube arrière 115, transversal, et qui est configurée pour fixer de manière amovible le coussin modulaire d'assise 120.

En outre, le coussin modulaire d'assise 120 peut comprendre à l'état assemblé au moins les composants suivants :
- une base principale 120a (ou centrale) ayant une surface inférieure configurée pour être fixée sur la structure d'assise 100a,
- une matelassure centrale 120b reposant sur une surface supérieure SP1 de la base principale et formant une portion centrale,
- un revêtement central d'habillage 120c recouvrant la matelassure centrale, en étant typiquement fixé à la base principale 120a,
- au moins un traversin latéral modulaire 130 fixé de manière amovible sur la base principale 120a.

La base principale 120a peut être en matériau plastique, par exemple thermoplastique, et peut être un corps, de préférence mince, qui s'étend d'un bord arrière Bar jusqu'à un bord avant Bav typiquement selon la direction X (direction longitudinale), et d'un premier bord latéral BL1 jusqu'à un deuxième bord latéral BL2 selon la direction Y (direction transversale). La base principale peut être typiquement un corps moulé d'un seul tenant, typiquement par les techniques de moulage par injection.

Le profil du corps, vue selon une coupe passant par un plan XZ, peut être un profil montant, en condition normale d'utilisation du siège du véhicule, lorsqu'on se déplace depuis le bord arrière Bar, et vers le bord avant Bav, en particulier jusqu'au bord avant du corps. Un tel profil montant assure un maintien des hanches de l'utilisateur assis dans le siège, en limitant les risques de sous-marinage en cas de choc frontal.

Le profil du corps, vue selon une coupe passant par un plan YZ, peut être concave, le premier bord latéral BL1, et le deuxième bord latéral BL2 étant relevés suivant la direction Z, par rapport au corps entre les deux bords latéraux BL1, BL2.

En outre, la base principale 120a peut comprendre un système de suspension 140 prévu typiquement sur la base principale 120a entre le premier bord latéral BL1 et le deuxième bord latéral BL2 du corps.

Dans un ou plusieurs modes de réalisations, le système de suspension 140 peut être obtenu lors du moulage par injection, et peut consister en une portion élastique 141 ajourée de la base, s'étendant typiquement, sur la base, entre le premier bord latéral BL1 et le deuxième bord latéral BL2 à proximité de du bord arrière Bar par comparaison au bord avant Bav, à savoir que le système de suspension se situe, en particulier suivant la direction X, plus proche du bord arrière Bar que du bord avant Bav.

Dans un ou plusieurs modes de réalisations, la base principale 120a peut comprendre un système de suspension 140 qui s'étend typiquement sur la base principale entre un premier bord latéral et un deuxième bord latéral du corps.

En outre, la matelassure centrale 120b peut encore comprendre une portion centrale 120b0, une portion arrière 120b1, fixe, et une portion avant 120b2, mobile. La portion arrière 120b1 est fixée sur la base 120a alors qu'un système de glissière 128 peut être prévu entre la base principale 120a et la portion avant 120b2. Ce système de glissière permet d'avancer ou de reculer la portion avant 120b2 de la portion centrale 120b0 par rapport à la portion arrière 120b1.

Le coussin modulaire peut encore comprendre l'état assemblé, tout ou partie des composants suivants :
- une nappe électrique chauffante 125, résistive, et/ou
- un système de ventilation 126 électrique, configuré pour souffler de l'air au travers d'évents dans ladite base, et/ou
- un système de massage 127, comprenant un ou plusieurs actionneurs mécaniques.

Le traversin latéral modulaire 130 peut être agencé sur un des côtés de la matelassure centrale, suivant la direction transversale Y, et a pour fonction d'assurer un maintien latéral de l'occupant, le traversin latéral modulaire peut comprendre à l'état assemblé:
- une base latérale 130a,
- une matelassure latérale 130b reposant sur une surface supérieure SP2 de la base latérale et formant un bord relevé,
- un revêtement latéral d'habillage 130c recouvrant la matelassure latérale et typiquement fixé à la base latérale, en tout ou partie de la périphérie de la base latérale.

Comme illustré en figure 1d, les matelassures ou les revêtements sont configurés pour être indépendants pour chaque base (principale ou latérale), les matelassures conférant le moelleux et le confort de l'assise, et peuvent être dans une matière telle que la mousse expansée de polyuréthane. Cette indépendance facilite et améliore la maintenance de l'assise en évitant de démonter des parties non usées lors d'un remplacement. Par exemple, lors du remplacement d'un traversin latéral modulaire, il n'est pas nécessaire de retirer le revêtement et/ou la matelassure centrale.

Dans un ou plusieurs modes de réalisation, la base latérale peut être configurée de sorte que la surface inférieure SF2 de la base latérale soit en contact physique, à l'état assemblé, avec la surface supérieure SP1 de la base principale. En outre, la forme de la surface inférieure SF2 de la base latérale peut être configurée pour être adaptée ou complémentaire de la forme de la surface supérieure SP1 de la base principale.

La base latérale 130a peut être en matériau plastique, par exemple thermoplastique, et peut être un corps, de préférence mince, qui s'étend depuis le bord arrière Bar jusqu'au bord avant Bav, et d'un premier bord latéral de la base principale vers un deuxième bord latéral de la base principale. La base latérale peut être typiquement un corps moulé d'un seul tenant, typiquement par les techniques de moulage par injection.

En référence à la figure 1b et figure 1c, la surface inférieure SF2 de la base latérale peut comprendre en outre une pluralité d'organes d'alignement 170a configurés pour s'emboiter, à l'état assemblé, avec une pluralité de logements d'alignement 170b agencés sur la surface supérieure SP1 de la base principale, participant ainsi au maintien de la base latérale sur la base principale dans un plan transverse.

En outre, dans un ou plusieurs modes de réalisation, la base latérale peut comprendre un bord périphérique présentant une gorge 180 et le revêtement latéral d'habillage peut comprendre un système d'accrochage, tel qu'un profilé d'accrochage, agencé le long de l'extrémité du revêtement latéral d'habillage, le système d'accrochage, en particulier le profilé d'accrochage configuré pour venir pénétrer la gorge 180 en l'accrochant afin d'assurer le maintien du revêtement latéral à la base latérale, le revêtement latéral recouvrant la matelassure latérale en assurant son maintien sur ladite base latérale.

Dans un ou plusieurs modes de réalisations préférentielles, le coussin modulaire d'assise peut comprendre deux traversins latéraux modulaires disposés de chaque côté de la portion centrale (et/ou de la matelassure centrale), tous deux fixés de manière amovible, de manière indépendante sur la base principale 120a (ou base centrale). Selon un tel mode de réalisation, les deux traversins sont des composants modulaires en ce sens qu'ils sont amovibles en étant retirés lors de la maintenance, avantageusement sans démontage de la base principale à la structure du siège, et alors qu'au moins la matelassure centrale et le revêtement central restent fixés à la base principale.

Selon un deuxième mode de réalisation possible, le coussin modulaire d'assise peut comprendre un unique traversin modulaire d'assise, fixé de manière amovible et indépendante sur la base principale, d'un premier côté de la matelassure centrale, l'autre traversin d'assise, d'un deuxième côté de la matelassure centrale (opposé au premier côté), comportant une matelassure latérale reposant directement sur la base principale fixée par la base centrale par le revêtement central qui s'étend non seulement sur la portion centrale de la matelassure, mais également sur la matelassure latérale, de ce deuxième côté.

Dans un tel mode de réalisation, la matelassure centrale et la matelassure latérale du traversin latéral (non modulaire) sur le deuxième côté peuvent comprendre
- une matelassure d'un seul tenant qui forme successivement, suivant la direction transversale Y, le traversin latéral (non modulaire) et la portion centrale de la matelassure ou alternativement,
- deux matelassures indépendantes qui forment respectivement suivant la direction transversale Y, le traversin latéral (non modulaire) et la portion centrale de la matelassure .

Selon ce deuxième mode de réalisation possible, seul le traversin modulaire d'assise sur le premier côté peut être retiré lors de la maintenance sans démontage de la base principale à la structure du siège. Le traversin modulaire d'assise sur ce premier côté est typiquement disposé dans un véhicule, du côté à proximité d'une porte du véhicule, en ce qu'il s'agit typiquement du traversin s'usant le plus rapidement lorsque l'utilisateur entre et sort du véhicule.

En outre, le coussin modulaire peut comprendre un système d'interface mécanique entre la base principale 120a et la base latérale 130a, et qui peut être configuré pour autoriser le désassemblage du traversin latéral modulaire de la base principale, et cela, indépendamment de la matelassure centrale et du revêtement central d'habillage.

La figure 2a illustre un premier exemple de système d'interface mécanique, et la figure 2b illustre schématiquement la méthodologie pour mettre en place un traversin latéral modulaire sur un coussin modulaire d'assise comprenant un système d'interface mécanique selon la figure 2a.

La base principale 120a peut comprendre une direction longitudinale X, et le système d'interface mécanique peut comprendre :
- une interface mécanique arrière 210 comprenant une première partie de couplage 210a sur la base principale et une deuxième partie de couplage 210b sur la base latérale, la première partie de couplage et la deuxième partie de couplage pouvant coopérer par emboitement,
- une interface mécanique avant 220 comprenant une première partie de verrouillage sur la base principale et une deuxième partie de verrouillage sur la base latérale.

L'interface mécanique arrière et l'interface mécanique avant peuvent être configurées pour autoriser la fixation du traversin latéral modulaire sur la base principale suivant :
/A/ emboiter la première et deuxième partie de couplage,
/B/ pivoter ledit traversin modulaire autour de l'interface mécanique arrière jusqu'à réunir la première partie de verrouillage avec la deuxième partie de verrouillage.

Ainsi, la mise en place et la fixation du coussin modulaire d'assise à la structure de siège ainsi qu'au moins un traversin modulaire selon la présente invention est rapide, sûr et réalisé de préférence sans outil, en particulier pour les étapes /A/ et /B/ permettant de fixer au moins un traversin latéral modulaire.

Dans un ou plusieurs modes de réalisation, la base principale 120a peut être un corps obtenu par moulage par injection, et dans lequel la première partie de couplage et la première partie de verrouillage sont agencées d'un seul tenant avec le corps lors du moulage par injection. De même, la base latérale 130a peut être un corps obtenu par moulage par injection, et dans lequel la deuxième partie de couplage et la deuxième partie de verrouillage sont agencées d'un seul tenant avec le corps lors du moulage par injection.

À titre d'exemple, la première partie de couplage 210a peut être agencée sur une partie arrière de la base principale et peut comprendre une pluralité d'organes de verrouillages, par exemple sous forme de U inversé, solidaires de la partie arrière de la base principale. La deuxième partie de couplage 210b peut être agencée sur une partie arrière de la base latérale, et peut comprendre une pluralité de crochets solidaires de la partie arrière de la base latérale et qui sont configurés pour se verrouiller sur la pluralité d'organes de verrouillage. Chaque crochet peut comprendre une embase 210b1 comprenant une première extrémité distale libre 210b2 et une deuxième extrémité distale surmontée d'une dent de verrouillage 210b3, et la dent de verrouillage étant configurée pour venir en en contact avec une surface de l'organe de verrouillage de sorte à empêcher un déplacement arrière du traversin modulaire lorsque le traversin modulaire est à l'état assemblé.

Lors de /A/ correspondant à l'emboitement de la première partie de couplage 210a avec la deuxième partie de couplage 210b, l'extrémité distale libre respective de chaque crochet peut être insérée dans l'organe de verrouillage respectif jusqu'à ce que la dent de verrouillage vienne en contact avec la surface de l'organe de verrouillage, l'extrémité distale étant insérée suivant un angle prédéterminé compris entre 5 et 50 degrés dans le plan XZ, et entre l'extrémité distale libre à l'état assemblé et l'extrémité distale libre en contact avec la surface de l'organe de verrouillage avant pivotement.

Dans un ou plusieurs modes de réalisation, la première partie de verrouillage et la deuxième partie de verrouillage peuvent s'emboiter élastiquement lors du pivotement en B/. La première partie de verrouillage et/ou la deuxième partie de verrouillage peuvent se déformer élastiquement jusqu'à revenir en position, afin d'assurer un verrouillage.

Les figures 3a à 3e illustrent différents modes de réalisations de la première et la deuxième partie de verrouillage.

Selon un premier mode de réalisation présenté en figure 3a, la première partie de verrouillage peut comprendre une ouverture traversante 320a1 agencée sur la surface supérieure de la partie avant de la base principale (ou sur un bord avant de la base principale), et la deuxième partie de verrouillage peut comprendre au moins un clip de verrouillage 320a2 solidaire de la surface inférieure de la partie avant de la base latérale et qui est configuré pour venir s'engager dans l'ouverture traversante de manière à fixer (e.g. élastiquement) la partie avant de la base latérale sur la partie avant de la base principale. Le clip de verrouillage 320a2 se déforme élastiquement pour traverser l'ouverture traversante 320a1, avant de se déployer, après passage de l'ouverture traversante 320a1, en interdisant son retrait suivant un mouvement inverse.

Selon un deuxième mode de réalisation présenté en figure 3b et 3c, la deuxième partie de verrouillage peut comprendre une ouverture traversante 320b2 agencée sur un bord de la partie avant de la base latérale, et la première partie de verrouillage peut comprendre au moins un clip de maintient 320b1 solidaire d'un bord de la partie avant de la base principale et qui est configuré pour venir s'engager dans l'ouverture traversante de manière à fixer (e.g. élastiquement) la partie avant de la base latérale sur la partie avant de la base principale.

Dans un ou plusieurs modes de réalisations, le clip de peut être formé d'un seul tenant (voir figure 3c) avec la base principale lors du moulage par injection.

Selon un troisième mode de réalisation illustré en figure 3d, la première partie de verrouillage peut comprendre une gâche 330a1 et la deuxième partie de verrouillage peut comprendre un loquet 330a2. Le loquet et la gâche peuvent être mis en regard en fin de pivotement en B/, et le verrouillage du traversin latéral modulaire sur la base principale peut être obtenu suivant:
/C/ engager le loquet dans la gâche.

Selon un quatrième mode de réalisation illustré en figure 3e, la première partie de verrouillage et la deuxième partie de verrouillage peuvent être fixées entres elles par un système vis-écrou 340 par exemple.

La figure 4a illustre un deuxième exemple de système d'interface mécanique et la figure 4b illustre schématiquement la méthodologie pour mettre en place un traversin latéral modulaire sur un coussin modulaire d'assise comprenant un système d'interface mécanique selon la figure 4a.

En référence à la figure 4a et 4b, la base principale peut comprendre une direction longitudinale X, et le système d'interface mécanique peut comprendre une pluralité de premières parties de couplage 410 agencées sur la base latérale et une pluralité de deuxièmes parties 420 de couplage agencées sur la base principale.

Par exemple, les premières parties de couplage 410 peuvent être agencées sur la surface inférieure de la base latérale, et plus particulièrement le long du bord intérieur de la surface inférieure de la base latérale.

Les premières parties de couplage et les deuxièmes parties de couplage peuvent être configurées pour s'emboiter (e.g. élastiquement), le système interface mécanique peut être configuré pour autoriser la fixation du traversin latéral modulaire sur le coussin modulaire d'assise suivant :
/E/ mettre en regard les premières parties de couplage avec respectivement lesdites deuxièmes parties de couplage,
/F/ translater verticalement le traversin latéral modulaire jusqu'à l'emboitement des premières parties de couplage avec lesdites deuxièmes parties de couplage

À titre d'exemple, la pluralité de premières parties de couplages peut comprendre une pluralité de clips solidaires 410 du bord intérieur de la surface intérieure de ladite base latérale, la pluralité de clips solidaires s'étendant perpendiculairement à partir dudit bord intérieur. La pluralité de deuxièmes parties de couplage peut comprendre une pluralité de logements 420 de verrouillage agencés sur la surface supérieure de la base principale.

Chaque clip peut être configuré pour s'emboiter (e.g. élastiquement), à l'état assemblé du traversin latéral modulaire, avec un logement de verrouillage respectif agencé sur la surface supérieure de la base principale.

La présente invention concerne encore un procédé d'obtention d'un ensemble de siège selon la présente invention comprenant les étapes suivantes:
- fourniture d'une structure de siège 100, à l'état assemblé, comprenant une structure d'assise et une structure de dossier,
- fourniture d'un coussin modulaire d'assise selon la présente invention comprenant à l'état assemblé au moins une base principale ayant une surface inférieure configurée pour être fixée sur ladite structure d'assise, une matelassure centrale reposant sur une surface supérieure de la base principale et formant une portion centrale, un revêtement central d'habillage recouvrant la matelassure centrale, mais encore d'au moins un traversin latéral modulaire fixé de manière amovible sur la base principale, ledit au moins un traversin modulaire comprenant à l'état assemblé une base latérale, une matelassure latérale reposant sur une surface supérieure de la base latérale et formant un bord relevé, un revêtement latéral d'habillage recouvrant la matelassure latérale, le coussin modulaire comprenant un système de fixation amovible entre la base principale et la base latérale,
- assemblage du coussin modulaire à ladite structure de siège.

L 'assemblage du coussin modulaire d'assise à la structure de siège peut être mis en œuvre sur un site d'assemblage final, alors que la fabrication du coussin modulaire d'assise lui-même, et en particulier l'assemblage de ses divers composants, mis en œuvre sur un site distinct du site d'assemblage final.

La fabrication du coussin modulaire d'assise peut comprendre, dans un premier temps, le pré-assemblage du traversin latéral modulaire par assemblage de la base latérale, de la matelassure latérale et du revêtement latéral et d'autre part, le pré-assemblage de la matelassure centrale sur la base principale et du revêtement principal venant recouvrir la matelassure centrale en la fixant à la base principale. On peut ensuite fixer le traversin latéral modulaire (ou les deux traversins latéraux modulaires) à la base principale. L'assemblage entre le coussin modulaire et la structure de siège ainsi qu'entre le traversin modulaire et le coussin modulaire, peut autoriser encore un démontage rapide, et avantageusement un démontage/retrait du coussin modulaire et/ou du traversin latéral modulaire sans démontage de la structure de siège au plancher du véhicule.

Aussi, la présente invention est encore relative à un procédé de maintenance d'un ensemble de siège selon la présente invention, comprenant le désassemblage d'au moins traversin latéral modulaire de la base principale sans démontage du coussin modulaire d'assise de la structure de siège par la mise en œuvre suivante :
/C/ déverrouillage de la base latérale de la base principale par le système d'interface mécanique, et successivement
/D/ retrait du au moins traversin latéral modulaire.

Un tel retrait d'au moins un traversin latéral modulaire, sans démontage de la structure du siège autorise une maintenance aisée du traversin, par remplacement d'un ou plusieurs éléments usés, par exemple remplacement d'un ou plusieurs garnitures/revêtement/matelassure, par substitution d'un traversin modulaire neuf, voire agrémenté d'équipement de confort.

### Liste des signes de référence

- 100. Structure de siège,
- 100a. Structure d'assise,
- 100b. Structure de dossier,
- 110. Flasques (structure d'assise),
- 113,115. Respectivement, tube avant et tube arrière, transversaux (structure d'assise),
- 120. Coussin modulaire d'assise,
- 120b. Matelassure centrale,
- 120b2, 120b1, 120b0. Portion avant, portion arrière, portion centrale,
- 120c. Revêtement centrale d'habillage,
- 125. Nappe résistive chauffante,
- 126. Ventilateur,
- 127. Système de massage à actionneurs,
- 128. Système de glissière,
- 130. Traversin modulaire d'assise,
- 130a. Base latérale,
- 130b. Matelassure latérale,
- 130c. Revêtement latéral d'habillage,
- 140,141. Système de suspension,
- 170a. Pluralité d'organes d'alignement,
- 170b. Pluralité de logements d'alignement,
- 180. Gorge,
- 210. Interface mécanique arrière,
- 210a. première partie de couplage,
- 210b. deuxième partie de couplage,
- 220. Interface mécanique avant,
- 320a1, 320b2. Ouverture traversante,
- 320a2. Clip de verrouillage,
- 320b1. Clip de maintien,
- 330a1. Gâche,
- 330a2. Loquet,
- 340. Système vis-écrou.
- 410. Pluralité de clips,
- 420. Pluralité de logements de verrouillage,
- Bar, Bav. Bord arrière et bord avant,
- BL1, BL2. Premier bord latéral et deuxième bord latéral,
- G1, G2. Glissière gauche et glissière droite,
- SP1. Surface supérieure de la base principale,
- SF1, SP2. Surface inférieure et supérieure de la base latérale.

## Revendications

1. Coussin modulaire (120) d'assise configuré pour être fixé à une structure d'assise (100a), ladite structure d'assise étant configurée pour fixer de manière amovible ledit coussin modulaire d'assise,
ledit coussin modulaire d'assise (120) comprend à l'état assemblé :
- une base principale (120a) ayant une surface inférieure configurée pour être fixée sur ladite structure d'assise (100a),
- une matelassure centrale (120b) reposant sur une surface supérieure de la base principale et formant une portion centrale,
- un revêtement central d'habillage (120c) recouvrant la matelassure centrale,
- au moins un traversin latéral modulaire (130) fixé de manière amovible sur la base principale et comprenant à l'état assemblé :
- une base latérale (130a),
- une matelassure latérale (130b) reposant sur une surface supérieure de la base latérale et formant un bord relevé,
- un revêtement latéral d'habillage (130c) recouvrant la matelassure latérale,
le coussin modulaire comprenant un système d'interface mécanique entre la base principale (120a) et la base latérale (130a),
ledit coussin modulaire étant configuré pour autoriser le désassemblage du traversin latéral modulaire de la base principale indépendamment de la matelassure centrale et du revêtement central d'habillage qui restent fixés à la base principale.

2. Coussin modulaire d'assise selon la revendication précédente, dans lequel le système d'interface mécanique comprend :
- une interface mécanique arrière (210) comprenant une première partie de couplage (210a) sur la base principale et une deuxième partie de couplage (210b) sur la base latérale, ladite première partie de couplage et ladite deuxième partie de couplage coopérant par emboitement,
- une interface mécanique avant (220) comprenant une première partie de verrouillage (320a1 ; 320b1 ;330a2) sur la base principale et une deuxième partie de verrouillage (320a2 ;320b2; 330a1) sur la base latérale,
et dans lequel l'interface mécanique arrière et l'interface mécanique avant sont configurées pour autoriser la fixation du traversin latéral modulaire sur la base principale suivant :
/A/ emboiter la première et deuxième partie de couplage,
/B/ pivoter ledit traversin modulaire autour de l'interface mécanique arrière jusqu'à réunir la première partie de verrouillage avec la deuxième partie de verrouillage.

3. Coussin modulaire d'assise selon la revendication précédente, dans lequel la première partie de verrouillage (320a1 ; 320b1) et la deuxième partie de verrouillage (320a2 ;320b2) s'emboitent élastiquement lors du pivotement en /B/.

4. Coussin modulaire d'assise selon la revendication 2, dans lequel la première partie de verrouillage comprend une gâche (330a1) et la deuxième partie de verrouillage comprend un loquet (330a2), le loquet et la gâche étant mis en regard en fin de pivotement en B/, et dans lequel un verrouillage du traversin latéral modulaire sur la base principale est obtenu suivant :
/C/ engager le loquet dans la gâche.

5. Coussin modulaire d'assise selon la revendication 2, dans lequel la première partie de verrouillage et la deuxième partie de verrouillage sont fixées entre elles par un système vis-écrou (340).

6. Coussin modulaire d'assise selon la revendication 1, dans lequel le système d'interface mécanique comprend une pluralité de premières parties de couplage (410) agencées sur ladite base latérale et une pluralité de deuxièmes parties de couplage (420) agencées sur la base principale, lesdites premières parties couplage et lesdites deuxièmes parties de couplage coopérant par emboitement,
et dans lequel ledit système interface mécanique est configuré pour autoriser la fixation dudit traversin latéral modulaire sur ledit coussin modulaire d'assise suivant :
/E/ mettre en regard les premières parties de couplage avec respectivement lesdites deuxièmes parties de couplage,
/F/ translater verticalement le traversin latéral modulaire jusqu'à l'emboitement des premières parties de couplage avec lesdites deuxièmes parties de couplage.

7. Coussin modulaire d'assise selon l'une des revendications précédentes, dans lequel la base latérale comprend un bord périphérique comprenant une gorge et le revêtement latéral d'habillage est pourvu d'un système d'accrochage le long d'au moins une partie d'extrémité du revêtement latéral d'habillage, ledit système d'accrochage étant configuré pour pénétrer la gorge en l'accrochant.

8. Ensemble de siège comprenant un coussin modulaire d'assise (130) selon l'une des revendications 1 à 7 et une structure de siège (100) présentant une structure d'assise (100a), voire une structure de dossier (100b) et dans lequel,
ledit coussin modulaire d'assise comprend à l'état assemblé :
- la base principale ayant une surface inférieure configurée pour être fixée sur ladite structure d'assise,
- la matelassure centrale reposant sur une surface supérieure de la base principale et formant une portion centrale,
- le revêtement central d'habillage recouvrant la matelassure centrale,
- ledit au moins un traversin latéral modulaire fixé de manière amovible sur la base principale et comprenant à l'état assemblé :
- la base latérale,
- ladite matelassure latérale reposant sur une surface supérieure de la base latérale et formant un bord relevé,
- ledit revêtement latéral d'habillage recouvrant la matelassure latérale,
le coussin modulaire comprenant un système d'interface mécanique entre la base principale et la base latérale,
le coussin modulaire étant configuré pour autoriser le retrait du traversin latéral modulaire de la base principale indépendamment de la matelassure centrale et du revêtement central d'habillage qui restent fixés à la base principale.

9. Procédé d'obtention d'un ensemble de siège selon la revendication 8 comprenant:
- fourniture d'une structure de siège (100), à l'état assemblé, comprenant une structure d'assise (110a), voire une structure de dossier (110b),
- fourniture d'un coussin modulaire d'assise selon l'une des revendications 1 à 7 comprenant à l'état assemblé au moins la base principale ayant une surface inférieure configurée pour être fixée sur ladite structure d'assise, la matelassure centrale reposant sur une surface supérieure de la base principale et formant une portion centrale, le revêtement central d'habillage recouvrant la matelassure centrale,
et ledit au moins un traversin latéral modulaire fixé de manière amovible sur la base principale, ledit au moins un traversin modulaire comprenant à l'état assemblé la base latérale, une matelassure latérale reposant sur une surface supérieure de la base latérale et formant un bord relevé, un revêtement latéral d'habillage recouvrant la matelassure latérale, le coussin modulaire comprenant ledit système d'interface mécanique entre la base principale et la base latérale,
- assemblage du coussin modulaire à ladite structure de siège.

10. Procédé de maintenance d'un ensemble de siège selon la revendication 8, ou obtenu selon la revendication 9, comprenant le désassemblage dudit au moins traversin latéral modulaire de la base principale sans démontage du coussin modulaire d'assise à la structure du siège par la mise en œuvre suivante :
/C/ déverrouillage de la base latérale de la base principale par le système de fixation, et successivement,
/D/ retrait du au moins traversin latéral modulaire.

## Patentansprüche

1. Modulares Polsterkissen (120), das konfiguriert ist, um an einer Polsterstruktur (100a) befestigt zu werden, wobei die Polsterstruktur zum abnehmbaren Befestigen des modularen Polsterkissens konfiguriert ist,
das modulare Polsterkissen (120) in dem zusammengebauten Zustand umfasst:
- eine Hauptbasis (120a), die eine untere Oberfläche aufweist, die konfiguriert ist, um an der Polsterstruktur (100a) befestigt zu werden,
- eine zentrale Polsterung (120b), die auf einer oberen Oberfläche der Hauptbasis aufliegt und einen zentralen Abschnitt bildet,
- eine zentrale Verkleidungsabdeckung (120c), die die zentrale Polsterung abdeckt,
- mindestens eine modulare Seitenunterlage (130), die an der Hauptbasis abnehmbar befestigt ist und in dem zusammengebauten Zustand umfasst:
- eine Seitenbasis (130a),
- eine Seitenpolsterung (130b), die auf einer oberen Oberfläche der Seitenbasis aufliegt und einen erhöhten Rand bildet,
- eine Seitenverkleidungsabdeckung (130c), die die Seitenpolsterung abdeckt,
das modulare Kissen umfassend ein mechanisches Schnittstellensystem zwischen der Hauptbasis (120a) und der Seitenbasis (130a),
wobei das modulare Kissen konfiguriert ist, um eine Demontage der modularen Seitenunterlage von der Hauptbasis unabhängig von der zentralen Polsterung und der zentralen Verkleidungsabdeckung zu ermöglichen, die an der Hauptbasis befestigt bleiben.

2. Modulares Polsterkissen nach dem vorstehenden Anspruch, wobei das mechanische Schnittstellensystem umfasst:
- eine hintere mechanische Schnittstelle (210), umfassend ein erstes Kopplungsteil (210a) an der Hauptbasis und ein zweites Kopplungsteil (210b) an der Seitenbasis, wobei das erste Kopplungsteil und das zweite Kopplungsteil durch Verriegeln ineinandergreifen,
- eine vordere mechanische Schnittstelle (220), umfassend ein erstes Verriegelungsteil (320a1; 320b1; 330a2) an der Hauptbasis und ein zweites Verriegelungsteil (320a2; 320b2; 330a1) an der Seitenbasis,
und wobei die hintere mechanische Schnittstelle und die vordere mechanische Schnittstelle konfiguriert sind, um die Befestigung der modularen Seitenunterlage an der Hauptbasis wie folgt zu ermöglichen:
A. Verriegeln des ersten und des zweiten Kopplungsteils,
B. Schwenken der modularen Unterlage um die hintere mechanische Schnittstelle herum, bis das erste Verriegelungsteil mit dem zweiten Verriegelungsteil verbunden ist.

3. Modulares Polsterkissen nach dem vorstehenden Anspruch, wobei sich das erste Verriegelungsteil (320a1; 320b1) und das zweite Verriegelungsteil (320a2; 320b2) während des Schwenkens in B elastisch verriegeln.

4. Modulares Polsterkissen nach Anspruch 2, wobei das erste Verriegelungsteil einen Anschlag (330a1) umfasst und das zweite Verriegelungsteil einen Riegel (330a2) umfasst, wobei der Riegel und der Anschlag an dem Ende des Schwenkens in B. einander zugewandt positioniert sind, und wobei ein Verriegeln der modularen Seitenunterlage auf die Hauptbasis wie folgt erreicht wird:
C. Einsetzen des Riegels in den Anschlag.

5. Modulares Polsterkissen nach Anspruch 2, wobei das erste Verriegelungsteil und das zweite Verriegelungsteil durch ein Schrauben-Mutter-System (340) aneinander befestigt sind.

6. Modulares Polsterkissen nach Anspruch 1, wobei das mechanische Schnittstellensystem eine Vielzahl von ersten Kopplungsteilen (410), die auf der Seitenbasis eingerichtet sind, und eine Vielzahl von zweiten Kopplungsteilen (420), die auf der Hauptbasis eingerichtet sind, umfasst, wobei die ersten Kopplungsteile und die zweiten Kopplungsteile durch Verriegeln ineinandergreifen,
und wobei das mechanische Schnittstellensystem konfiguriert ist, um die Befestigung der modularen Seitenunterlage an dem modularen Polsterkissen wie folgt zu ermöglichen:
E. Positionieren der ersten Kopplungsteile, um jeweils den zweiten Kopplungsteilen zugewandt zu sein,
F. vertikales Verschieben der modularen Seitenunterlage bis die ersten Kopplungsteile mit den zweiten Kopplungsteilen verriegelt sind.

7. Modulares Polsterkissen nach einem der vorstehenden Ansprüche, wobei die Seitenbasis einen Umfangsrand umfasst, umfassend eine Nut, und die Seitenverkleidungsabdeckung mit einem System zum Anbringen entlang mindestens eines Endteils der Seitenverkleidungsabdeckung bereitgestellt ist, wobei das Anbringungssystem konfiguriert ist, um während des Anbringens in die Nut einzudringen.

8. Sitzanordnung, umfassend ein modulares Polsterkissen (130) nach einem der Ansprüche 1 bis 7 und eine Sitzstruktur (100), die eine Polstertruktur (100a) oder sogar eine Rückenlehnenstruktur (100b) aufweist, und wobei
das modulare Polsterkissen in dem zusammengebauten Zustand umfasst:
- die Hauptbasis, die eine untere Oberfläche aufweist, die konfiguriert ist, um an der Polsterstruktur befestigt zu werden,
- die zentrale Polsterung, die auf einer oberen Oberfläche der Hauptbasis aufliegt und einen zentralen Abschnitt bildet,
- die zentrale Verkleidungsabdeckung, die die zentrale Polsterung abdeckt,
- die mindestens eine modulare Seitenunterlage, die an der Hauptbasis abnehmbar befestigt ist und in dem zusammengebauten Zustand umfasst:
- die Seitenbasis,
- die Seitenpolsterung, die auf einer oberen Oberfläche der Seitenbasis aufliegt und einen erhöhten Rand bildet,
- die Seitenverkleidungsabdeckung, die die seitliche Polsterung abdeckt,
das modulare Kissen umfassend ein mechanisches Schnittstellensystem zwischen der Hauptbasis und der Seitenbasis,
wobei das modulare Kissen konfiguriert ist, um die Abnahme der modularen Seitenunterlage von der Hauptbasis unabhängig von der zentralen Polsterung und der zentralen Verkleidungsabdeckung zu ermöglichen, die an der Hauptbasis befestigt bleiben.

9. Verfahren zum Erhalten einer Sitzanordnung nach Anspruch 8, umfassend:
- Bereitstellen einer Sitzstruktur (100), in dem zusammengebauten Zustand, umfassend eine Polsterstruktur (110a) oder sogar eine Rückenlehnenstruktur (110b),
- Bereitstellen eines modularen Polsterkissens nach einem der Ansprüche 1 bis 7, umfassend, in dem zusammengebauten Zustand, mindestens die Hauptbasis, die eine untere Oberfläche aufweist, die konfiguriert ist, um an der Polsterstruktur befestigt zu werden, wobei die zentrale Polsterung auf einer oberen Oberfläche der Hauptbasis aufliegt und einen zentralen Abschnitt bildet, wobei die zentrale Verkleidungsabdeckung die zentrale Polsterung abdeckt,
und die mindestens eine modulare Seitenunterlage, die an der Hauptbasis abnehmbar befestigt ist, die mindestens eine modulare Seitenunterlage umfassend, in dem zusammengebauten Zustand, die Seitenbasis, eine Seitenpolsterung, die auf einer oberen Oberfläche der Seitenbasis aufliegt und einen erhöhten Rand bildet, und eine Seitenverkleidungsabdeckung, die die Seitenpolsterung abdeckt, das modulare Kissen umfassend das mechanische Schnittstellensystem zwischen der Hauptbasis und der Seitenbasis,
- Verbinden des modularen Kissens mit der Polsterstruktur.

10. Verfahren zum Warten einer Sitzanordnung nach Anspruch 8 oder erhalten nach Anspruch 9, umfassend das Demontieren von mindestens der modularen Seitenunterlage von der Hauptbasis, ohne das modulare Polsterkissen von der Sitzstruktur abzunehmen, durch die folgende Implementierung:
C. Entriegeln der Seitenbasis von der Hauptbasis mittels des Befestigungssystems und anschließend
D. Abnehmen von mindestens der modularen Seitenunterlage.

## Claims

1. Modular squab cushion (120) configured to be attached to a squab structure (100a), said squab structure being configured for removably attaching said modular squab cushion,
said modular squab cushion (120) comprises, in the assembled state:
- a main base (120a) having a lower surface configured to be attached to the squab structure (100a),
- a central padding (120b) resting on an upper surface of the main base and forming a central portion,
- a central trim covering (120c) that covers the central padding,
- at least one modular lateral bolster (130) removably attached to the main base and comprising, in the assembled state:
- a lateral base (130a),
- a lateral padding (130b) resting on an upper surface of the lateral base and forming a raised edge,
- a lateral trim covering (130c) that covers the lateral padding,
the modular cushion comprising a mechanical interface system between the main base (120a) and the lateral base (130a),
said modular cushion being configured to allow disassembly of the modular lateral bolster from the main base independently of the central padding and the central trim covering, which remain attached to the main base.

2. Modular squab cushion according to the preceding claim, wherein the mechanical interface system comprises:
- a rear mechanical interface (210) comprising a first coupling part (210a) on the main base and a second coupling part (210b) on the lateral base, said first coupling part and said second coupling part engaging by interlocking,
- a front mechanical interface (220) comprising a first locking part (320a1; 320b1; 330a2) on the main base and a second locking part (320a2; 320b2; 330a1) on the lateral base,
and wherein the rear mechanical interface and the front mechanical interface are configured to allow the attachment of the modular lateral bolster onto the main base as follows:
A. interlocking the first and second coupling parts,
B. pivoting said modular bolster around the rear mechanical interface until the first locking part is joined to the second locking part.

3. Modular squab cushion according to the preceding claim, wherein the first locking part (320a1; 320b1) and the second locking part (320a2; 320b2) elastically interlock during the pivoting in B.

4. Modular squab cushion according to claim 2, wherein the first locking part comprises a strike (330a1) and the second locking part comprises a latch (330a2), the latch and the strike being positioned facing one another at the end of pivoting in B., and wherein a locking of the modular lateral bolster onto the main base is obtained as follows:
C. inserting the latch into the strike.

5. Modular squab cushion according to claim 2, wherein the first locking part and the second locking part are attached to each other by a screw-nut system (340).

6. Modular squab cushion according to claim 1, wherein the mechanical interface system comprises a plurality of first coupling parts (410) arranged on said lateral base and a plurality of second coupling parts (420) arranged on the main base, said first coupling parts and said second coupling parts engaging by interlocking,
and wherein said mechanical interface system is configured to allow the attachment of said modular lateral bolster onto said modular squab cushion as follows:
E. positioning the first coupling parts to be facing said second coupling parts, respectively,
F. vertically translating the modular lateral bolster until the first coupling parts are interlocked with said second coupling parts.

7. Modular squab cushion according to one of the preceding claims, wherein the lateral base comprises a peripheral edge comprising a groove and the lateral trim covering is provided with a system for fastening along at least one end part of the lateral trim covering, said fastening system being configured to penetrate the groove while fastening it.

8. Seat assembly comprising a modular squab cushion (130) according to one of claims 1 to 7 and a seat structure (100) having a squab structure (100a), or even a backrest structure (100b) and wherein,
said modular squab cushion comprises, in the assembled state:
- the main base having a lower surface configured to be attached to said squab structure,
- the central padding resting on an upper surface of the main base and forming a central portion,
- the central trim covering that covers the central padding,
- said at least one modular lateral bolster removably attached to the main base and comprising, in the assembled state:
- the lateral base,
- said lateral padding resting on an upper surface of the lateral base and forming a raised edge,
- said lateral trim covering that covers the lateral padding,
the modular cushion comprising a mechanical interface system between the main base and the lateral base,
the modular cushion being configured to allow the removal of the modular lateral bolster from the main base independently of the central padding and the central trim covering that remain attached to the main base.

9. Method for obtaining a seat assembly according to claim 8, comprising:
- providing a seat structure (100), in the assembled state, comprising a squab structure (110a), or even a backrest structure (110b),
- providing a modular squab cushion according to one of claims 1 to 7 comprising, in the assembled state, at least the main base having a lower surface configured to be attached to said squab structure, the central padding resting on an upper surface of the main base and forming a central portion, the central trim covering that covers the central padding,
and said at least one modular lateral bolster removably attached to the main base, said at least one modular bolster comprising, in the assembled state, the lateral base, a lateral padding resting on an upper surface of the lateral base and forming a raised edge, a lateral trim covering that covers the lateral padding, the modular cushion comprising said mechanical interface system between the main base and the lateral base,
- joining the modular cushion to said squab structure.

10. Method for maintaining a seat assembly according to claim 8, or obtained according to claim 9, comprising disassembling at least said modular lateral bolster from the main base without removing the modular squab cushion from the seat structure by the following implementation:
C. unlocking the lateral base from the main base by means of the attachment system, and successively,
D. removing at least the modular lateral bolster.
